# EUROPÄISCHE PATENTSCHRIFT

(11) **EP 1 283 130 B1**
(45) Veröffentlichungstag und Bekanntmachung des Hinweises auf die Patenterteilung: **13.09.2006**
(21) Anmeldenummer: 02016224.4
(22) Anmeldetag: 19.07.2002
(51) Int. Cl.: B60R 5/04, B60N 2/36, B60R 21/06

(54) **Schutzvorrichtung für einen Laderaum eines Fahrzeugs**
Protection system for a vehicle luggage compartment
Dispositif de protection pour le compartiment bagages d'un véhicule

(30) Priorität: 07.08.2001 DE 10140256
(43) Veröffentlichungstag der Anmeldung: 12.02.2003
(73) Patentinhaber: BOS GmbH & Co. KG, 73760 Ostfildern (DE)
(72) Erfinder: Schlecht, Werner P., 71665 Vaihingen/Enz (DE); Seel, Holger, 71134 Aidlingen (DE)
(74) Vertreter: Patentanwälte Ruff, Wilhelm, Beier, Dauster & Partner

(56) Entgegenhaltungen:
- EP-A- 1 207 078
- WO-A-98/43854
- DE-A- 10 103 593
- FR-A- 2 767 099
- FR-A- 2 810 935
- US-A- 5 632 520
- US-A- 5 957 522
- PATENT ABSTRACTS OF JAPAN vol. 016, no. 122 (M-1226), 27. März 1992 (1992-03-27) & JP 03 287422 A (NHK SPRING CO LTD), 18. Dezember 1991 (1991-12-18)

## Beschreibung

Die Erfindung betrifft eine Schutzvorrichtung für einen Laderaum eines Fahrzeugs mit wenigstens einer Aufnahmeeinrichtung für die Halterung wenigstens eines flexiblen Flächengebildes, das in wenigstens eine ausgezogene Funktionsposition sowie in eine kompakte Ruheposition im Bereich der Aufnahmeeinrichtung beweglich angeordnet ist, wobei die Aufnahmeeinrichtung an einer Trägeranordnung gehalten ist, die fahrzeugseitig derart beweglich gelagert ist, dass die Aufnahmeeinrichtung in wenigstens zwei unterschiedliche Lagepositionen innerhalb des Fahrzeugs überführbar ist, und wobei die Trägeranordnung als vorzugsweise horizontal in Fahrzeuglängsrichtung verlagerbarer Linearträger gestaltet ist.

Eine derartige Schutzvorrichtung ist aus der EP 1 207 078 A2 allgemein bekannt. Die Schutzvorrichtung dient als Laderaumabdeck- und - trennvorrichtung für einen Laderaum eines Kraftfahrzeugs und weist ein Kassettengehäuse auf, das an zwei teleskopartig horizontal verschiebbaren Haltearmen gehalten ist.

Die US 5,632,520 nach dem Oberbegriff des Anspruchs 1 offenbart eine Schwenkwand für einen Laderaum eines Kraftfahrzeugs, an dessen oberer Längsseite ein Kassettengehäuse vorgesehen ist. Die Schwenkwand ist einschließlich Kassettengehäuse in eine horizontale Bodenposition absenkbar. In dem Kassettengehäuse selbst ist eine horizontal ausziehbare Laderaumabdeckung und ein etwa vertikal aufspannbares Trennnetz vorgesehen.

Weitere Schutzvorrichtungen sind für Kraftfahrzeuge allgemein bekannt. Eine derartige Schutzvorrichtung weist als Aufnahmeeinrichtung für ein flexibles Flächengebilde in Form einer Abdeckplane und/oder eines Trenn-Netzes eine Wickelwelle auf, die in einem Kassettengehäuse oder mittels einer anders gestalteten Halterung fahrzeugfest im Bereich des Laderaumes gelagert ist. Das flexible Flächengebilde ist auf der Wickelwelle auf- und abrollbar gehalten. In einer Ruheposition ist das Flächengebilde auf die Wickelwelle aufgerollt. Falls die Wickelwelle in einem Kassettengehäuse gelagert ist, ist das Flächengebilde in seiner aufgerollten Ruheposition nahezu vollständig innerhalb des Kassettengehäuses positioniert. Das Flächengebilde ist manuell oder mittels eines Antriebs in wenigstens eine teilweise oder vollständig ausgezogene Funktionsposition ausziehbar, indem das Flächengebilde in entsprechender Weise von der Wickelwelle abgerollt wird. Die Aufnahmeeinrichtung, d.h. insbesondere das Kassettengehäuse oder die Wickelwellenhalterung ist lösbar in den fahrzeugfesten Halterungen gehalten. Insbesondere bei einem Kombipersonenkraftwagen mit umklappbarer Rückenlehnenanordnung muß die Aufnahmeeinrichtung entfernt werden, um das Durchladen von sperrigen Gegenständen zu ermöglichen.

Es ist daher auch bekannt, ein Flächengebilde in Form eines Trenn-Netzes mittels einer entsprechenden Aufnahmeeinrichtung direkt an einer Rückseite der Rückenlehnenanordnung zu befestigen. Sobald die Rückenlehnenanordnung vorne umgeklappt wird, wird auch die Aufnahmeeinrichtung mit nach vorne geklappt. Das Trenn-Netz ist so dimensioniert, dass es auch in der nach vorne umgeklappten Liegeposition der Rückenlehnenanordnung bis in einen Dachhimmelbereich des Fahrzeuginnenraumes nach oben ausziehbar und dort in dachseitigen Halterungen festlegbar ist.

Aufgabe der Erfindung ist es, eine Schutzvorrichtung der eingangs genannten Art zu schaffen, die im Vergleich zum Stand der Technik verbesserte Einsatzmöglichkeiten aufweist.

Diese Aufgabe wird dadurch gelöst, dass der Linearträger - in Fahrtrichtung gesehen - hinter einer Fahrzeugsitzanordnung positioniert ist und durch Druckmittel gegen eine Rückenlehnenanordnung der Fahrzeugsitzanordnung gedrückt gehalten ist. Die erfindungsgemäße Lösung ist insbesondere vorteilhaft bei einer teilweise oder komplett verschiebbaren Fondsitzanordnung, da die Trägeranordnung der jeweils eingestellten Position einer Rückenlehnenanordnung der Fondsitzanordnung folgen kann. Dadurch, dass der Linearträger durch Druckmittel gegen die Rückenlehnenanordnung gedrückt gehalten ist, ist die Aufnahmeeinrichtung für das wenigstens eine flexible Flächengebilde zwangsläufig immer in der bestmöglichen vorderen Position gehalten.

In Ausgestaltung der Erfindung ist wenigstens ein flexibles Flächengebilde vorgesehen, das stirnseitig mit wenigstens einem Teil der Rückenlehnenanordnung lösbar verbunden ist. Diese Ausgestaltung ist insbesondere vorteilhaft für eine in der Fahrzeugbreite mehrteilig gestaltete Fahrzeugsitzanordnung, bei der die einzelnen Fahrzeugsitzteile in unterschiedlichen Positionen - auf die Fahrzeuglängsrichtung bezogen - ausgerichtet sein können. Vorzugsweise ist das jeweils mit der Rückenlehnenanordnung verbundene Flächengebilde in seiner Breite auf die Breite des jeweiligen Rückenlehnenteiles abgestimmt, so dass die Flächengebilde den jeweils verbleibenden, horizontalen Spalt zwischen der Aufnahmeeinrichtung, insbesondere einem Kassettengehäuse und der Rückseite der Rückenlehnenanordnung überdecken.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt schematisch in teilweise aufgebrochener Seitendarstellung ein Kraftfahrzeug mit einer nicht zur Erfindung gehörenden Schutzvorrichtung,
- Fig. 2: in perspektivischer, schematischer Darstellung die Schutzvorrichtung nach Fig. 1,
- Fig. 3: schematisch in einer Seitendarstellung die Schutzvorrichtung nach Fig. 2,
- Fig. 4: die Schutzvorrichtung nach Fig. 3 bei umgelegter Rückenlehnenanordnung,
- Fig. 5: die Schutzvorrichtung nach Fig. 4 in einer unteren Endposition,
- Fig. 6: schematisch in einer Darstellung ähnlich den Fig, 3 bis 5 eine weitere, nicht zur Erfindung gehörende Schutzvorrichtung,
- Fig. 7: die Schutzvorrichtung nach Fig. 6 in einer weiteren Schutzposition,
- Fig. 8: schematisch in einer Darstellung ähnlich den Fig. 3 bis 7 eine weitere Ausführung einer Schutzvorrichtung, die nicht zur Erfindung gehört,
- Fig. 9: schematisch eine Draufsicht auf einen mit der Schutzvorrichtung nach der Fig. 8 versehenen Fahrzeuginnenraum,
- Fig. 10: den Fahrzeuginnenraum nach Fig. 9 mit in unterschiedlichen Stellpositionen befindlichen Fondsitzteilen,
- Fig. 11: schematisch eine Ausführungsform einer erfindungsgemäßen Schutzvorrichtung in einer ersten Position und
- Fig. 12: die Schutzvorrichtung nach Fig. 11 in einer zweiten Schutzposition.

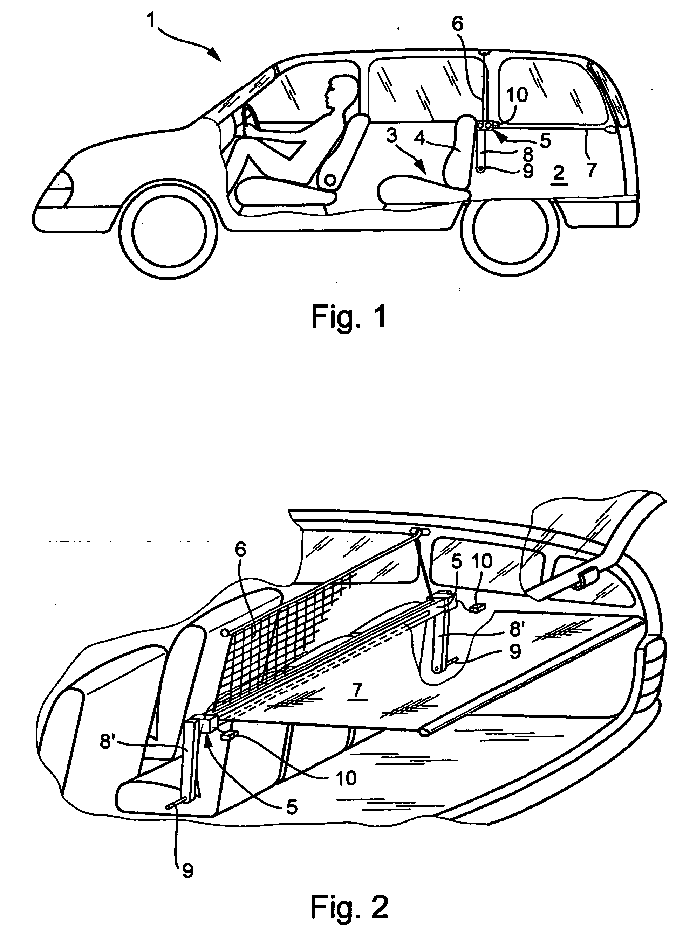

Ein Kraftfahrzeug 1, vorliegend in Form eines Kombi-Personenkraftwagens, weist einen Fahrzeuginnenraum auf, der in einem Heckbereich mit einem Laderaum 2 versehen ist. In Fahrtrichtung nach vorne schließt an den Laderaum 2 ein Fondsitzraum an, in dem eine Fondsitzanordnung 3 positioniert ist. Die Fondsitzanordnung 3 ist mit einer Rückenlehnenanordnung 4 versehen. Wie anhand der Fig. 2 erkennbar ist, ist die Fondsitzanordnung 3 über die Fahrzeugbreite dreigeteilt, indem drei einzeln verfahrbare, nebeneinander angeordnete Sitzteile vorgesehen sind. Jeder Sitzteil weist jeweils einen Rückenlehnenteil der Rückenlehnenanordnung 4 auf.

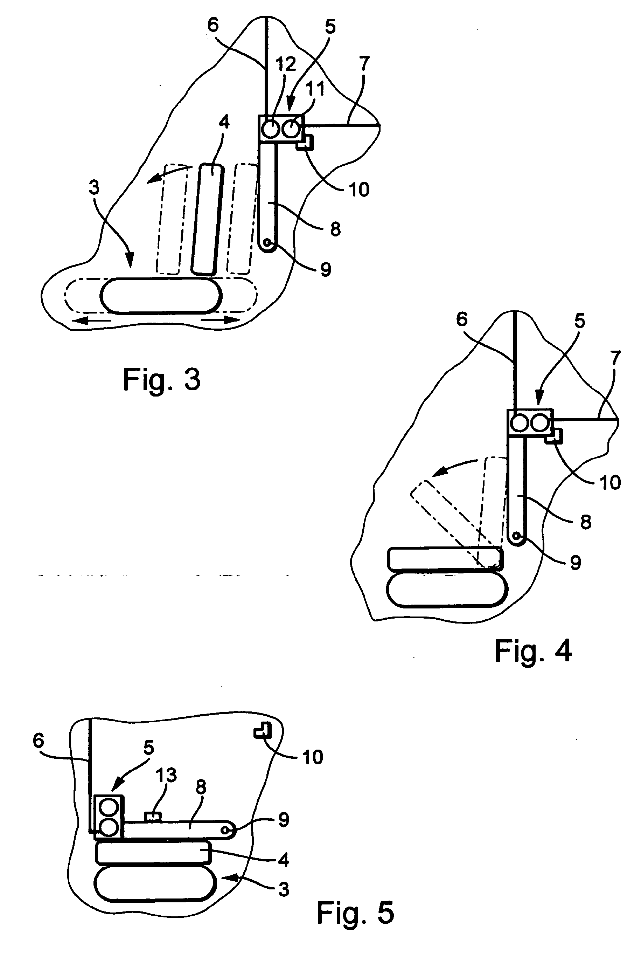

Der Laderaum 2 ist von dem Fondsitzraum mittels eines flexiblen Flächengebildes in Form eines vertikal aufspannbaren Trenn-Netzes 6 abtrennbar, um den front- und fondseitigen Fahrgastraum gegen aus dem Laderaum nach vorne geschleuderte Gegenstände zu schützen. Zudem ist der Laderaum 2 durch ein weiteres flexbiles Flächengebilde in Form einer horizontal aufspannbaren Abdeckplane etwa auf Höhe einer Fahrzeugbordkante insbesondere gegen Einblicke von oben geschützt. Die Abdeckplane 7 ist vorzugweise undurchsichtig gestaltet. Sowohl das Trenn-Netz 6 als auch die Abdeckplane 7 sind jeweils auf einer in Fig. 3 angedeuteten Wickelwelle 11, 12 auf- und abrollbar gehalten. Die beiden Wickelwellen 11, 12 sind horizontal und in Fahrzeugquerrichtung ausgerichtet in einem als Aufnahmevorrichtung dienenden Kassettengehäuse 5 drehbeweglich gelagert. Das Kassettengehäuse 5 ist fest, jedoch lösbar mit einer Trägeranordnung in Form eines Schwenkträgers 8 verbunden.

Der Schwenkträger 8 weist auf gegenüberliegenden Seiten jeweils einen Trägerschenkel 8' auf. Beide Trägerschenkel 8' sind um eine gemeinsame, horizontal und in Fahrzeugquerrichtung ausgerichtete Schwenkachse 9 mit Hilfe entsprechender Schwenklagerungen fahrzeugseitig schwenkbeweglich gelagert.

Das Kassettengehäuse 5 weist im Bereich seiner gegenüberliegenden Stirnseite jeweils eine parallel zu dem Profil des jeweiligen Trägerschenkels 8' verlaufende Profilierung auf, der am jeweiligen Trägerschenkel jeweils eine korrespondierende Profilierung zugeordnet ist. Mittels der Profilierungen ist das Kassettengehäuse 5 über seine Stirnflächen von oben her zwischen die Trägerschenkel einsteckbar und formschlüssig zwischen diesen gehalten. Vorzugsweise sind Rastmittel vorgesehen, die eine Positionssicherung des Kassettengehäuses 5 relativ zu den Trägerschenkeln 8' bewirken. Der Schwenkträger 8 und damit die beiden Trägerschenkel 8' sind in ihrer aufrechten Funktionsposition gemäß den Fig. 1 bis 4 durch Arretiermittel 10 gesichert. Als Arretiermittel 10 kann entweder eine den Schwenkträger 8 blockierende Verschlußvorrichtung oder eine Fangvorrichtung vorgesehen sein, die eine gewisse Beweglichkeit des Schwenkträgers ermöglicht. Vorzugsweise ist dem Schwenkträger 8 mindestens in einer Schwenkrichtung ein Anschlag für die obere Funktionsposition zugeordnet, um eine gleichbleibende Endlage für das Kassettengehäuse 5 und den Schwenkträger 8 in der aufrechten Funktionposition zu ermöglichen.

Wie anhand der Fig. 3 gut erkennbar ist, ist das Kassettengehäuse 5 einschließlich des Trenn-Netzes 6 und der Abdeckplane 7 durch den Schwenkträger 8 in einer aufrechten Funktionposition blockiert unabhängig von der in Fahrzeuglängsrichtung erfolgenden Verlagerung der Fahrzeugsitzanordnung 3.

Wie in Fig. 5 gezeigt ist, kann der Schwenkträger 8 auch in eine nach vorne geschwenkte, liegende Funktionsposition überführt werden, sobald die Rückenlehnenanordnung 4 in eine flache Ruheposition nach vorne geklappt ist. Auch für die liegende Funktionsposition ist dem Schwenkträger 8 wenigstens ein Arretiermittel 13 zugeordnet, das den Schwenkträger 8 und damit auch das Kassettengehäuse 5 in dieser Funktionsposition blockiert.

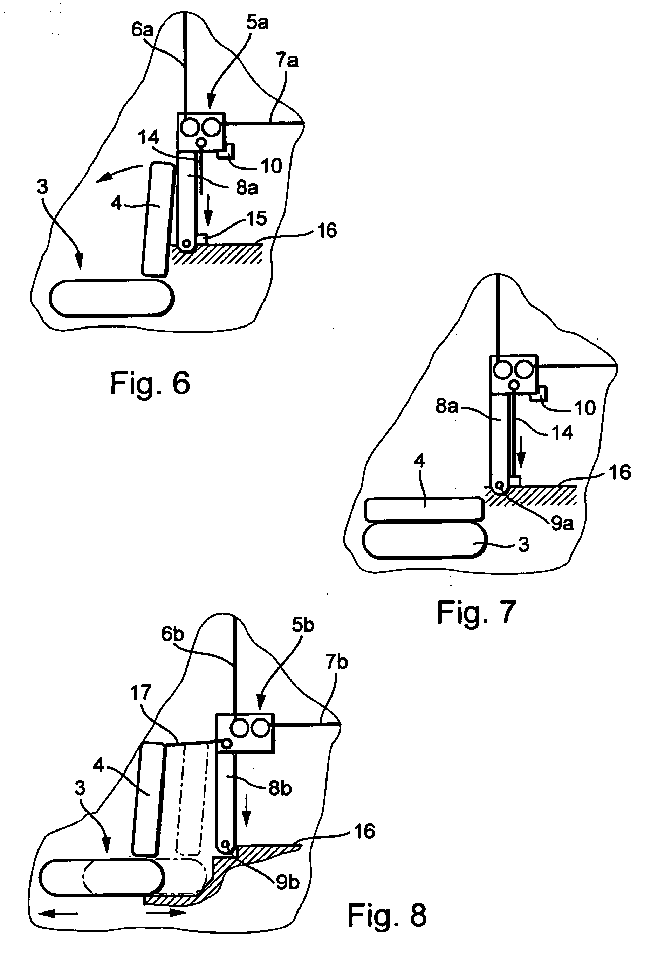

Bei der nicht zur Erfindung gehörenden Ausführung nach den Fig. 6 und 7 ist das Kassettengehäuse 5a ebenfalls an einem Schwenkträger 8a befestigt, wie dies bereits anhand der Fig. 1 bis 5 beschrieben wurde. Funktionsgleiche Teile der Schutzvorrichtung sind daher mit den gleichen Bezugszeichen unter Hinzufügung des Buchstabens "a" versehen. Wesentlicher Unterschied bei der Ausführung nach den Fig. 6 und 7 ist es, dass in dem Kassettengehäuse 5a noch ein weiteres flexibles Flächengebilde 14 auf- und abrollbar gelagert ist, das aus dem Kassettengehäuse 5a nach unten in Richtung zu einem Laderaumboden 16 ausziehbar ist. Hierzu sind im Bereich des Laderaumbodens 16 fahrzeugfeste Halterungen 15 vorgesehen, in denen ein vorderes Stirnende des flexiblen Flächengebildes 14, vorzugweise eine Auszugsleiste, lösbar befestigbar ist.

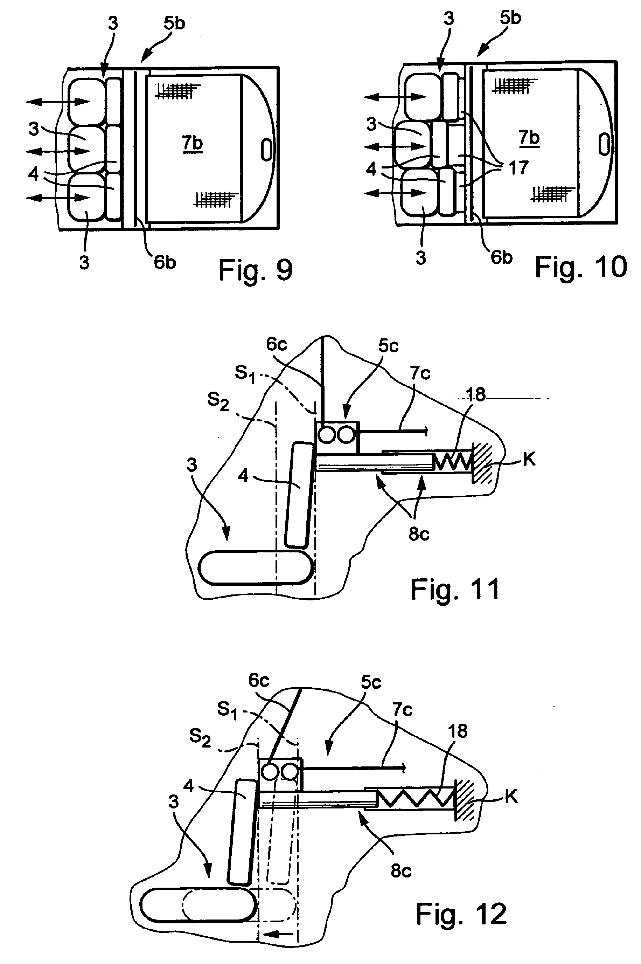

Bei der nicht zur Erfindung gehörenden Ausführung nach den Fig. 8 bis 10 ist in dem Kassettengehäuse 5b zusätzlich eine flexible Flächengebildeanordnung 17 vorgesehen, die aus drei voneinander unabhängig ausziehbaren, in Fahrzeugquerrichtung nebeneinander angeordneten Flächengebildeteilen zusammengesetzt ist. Die Flächengebildeteile der Flächengebildeanordnung 17 sind jeweils auf die Breite eines entsprechenden Rückenlehnenteiles abgestimmt und dienen dazu, den zwischen dem Kassettengehäuse 5b und der jeweiligen Rückenlehnenposition verbleibenden Spalt zu überbrücken, wie anhand der Fig. 9 bis 10 erkennbar ist. Auch das Kassettengehäuse 5b ist auf einem Schwenkträger 8b entsprechend den zuvor beschriebenen Ausführungsbeispielen gehalten, so dass zur näheren Erläuterung auf die zuvor beschriebenen Ausführungsformen nach den Fig. 1 bis 7 verwiesen wird. Auch beim Ausführungsbeispiel nach den Fig. 8 bis 10 sind bei funktionsgleichen Bauteilen die gleichen Bezugszeichen, jedoch unter Hinzufügung des Buchstabens "b" verwendet.

Bei dem erfindungsgemäßen Ausführungsbeispiel nach den Fig. 11 und 12 ist ein Kassettengehäuse 5c, das mit einem vertikalen Trenn-Netz 6c und einer horizontalen Abdeckplane 7c versehen ist, auf einem horizontal und in Fahrzeuglängsrichtung linear beweglichen Linearträger 8c gehalten, der eine Trägeranordnung im Sinne der Erfindung darstellt. Der Linearträger 8c besteht vorzugsweise aus zwei auf gegenüberliegenden Fahrzeugsseiten angeordneten, kolbenartigen Trägerprofilen, die identisch zueinander gestaltet und parallel zueinander ausgerichtet sind. Auf diesen Trägerprofilen ist das Kassettengehäuse 5c lösbar befestigt. Beide Trägerprofile des Linearträgers 8c sind in fahrzeugfesten, hohlzylindrischen Aufnahmen linearbeweglich verschiebbar, die Teil der Trägeranordnung sind. Die hohlzylindrischen Aufnahmen sind an entsprechenden, lediglich schematisch dargestellten Karosserieteilen K der Fahrzeugkarrosserie fahrzeugfest positioniert. Der Linearträger 8c ist durch Druckmittel 18, vorliegend in Form einer Druckfederanordnung in Fahrtrichtung nach vorne druckbelastet, so dass er permanent gegen die Rückseite der Rückenlehnenanordnung 4 der Fondsitzanordnung 3 gedrückt wird. Dadurch wird auch das Kassettengehäuse 5c, das bündig mit den vorderen Stirnseiten der Trägerprofile des Linearträgers 8c abschließt, gegen die Rückenlehnenanordnung 5 gedrückt gehalten. Falls die einzelnen Sitzteile der Fondsitzanordnung 3 in Fahrzeuglängsrichtung in unterschiedlichen Stellpositionen arretiert sind, liegt das Kassettengehäuse 5 und damit auch der Linearträger 8c an der jeweils hintersten Rückenlehne des jeweiligen Sitzteiles an.

Die Druckmittel 18 stellen für den Linearträger 8c einen Federspeicher dar, der als Antriebseinrichtung für den Linearträger 8c in Fahrtrichtung nach vorne dient.

Die anhand der nicht zu der Erfindung gehörenden Ausführungsformen gemäß den Fig. 1 bis 10 beschriebenen Schwenkträger sind ausschließlich manuell verschwenkbar. Bei anderen zu der Erfindung nicht gehörenden und nicht dargestellten Ausführungsbeispielen sind derartigen Schwenkträgern Antriebseinrichtungen zugeordnet, die mechanisch, elektrisch, hydraulisch oder pneumatisch ausgeführt sein können. Diese Antriebseinrichtungen können auf den jeweiligen Schwenkträger in lediglich einer einzelnen Schwenkrichtung oder in beiden Schwenkrichtungen ein entsprechendes Antriebsmoment aufbringen. Zur Steuerung ist eine Steuereinheit vorgesehen, die entweder manuell bedienbar oder abhängig von den Signalen einer geeigneten Sensorik entsprechende Steuerbewegungsbefehle auf den Schwenkträger ausübt. Hierzu kann insbesondere die Stellung die Rückenlehne erfaßt und abhängig von dem Ergebnis der erfassten Rückenlehnenposition eine Verschwenkung des Schwenkträgers vorgenommen werden.

## Patentansprüche

1. Schutzvorrichtung für einen Laderaum eines Fahrzeugs mit wenigstens einer Aufnahmeeinrichtung für die Halterung wenigstens eines flexiblen Flächengebildes, das in wenigstens eine ausgezogene Funktionposition sowie in eine kompakte Ruheposition im Bereich der Aufnahmeeinrichtung beweglich angeordnet ist, wobei die Aufnahmeeinrichtung (5c) an einer Trägeranordnung gehalten ist, die fahrzeugseitig derartig beweglich gelagert ist, dass die Aufnahmeeinrichtung (5c) in wenigstens zwei unterschiedliche Lagepositioneninnerhalb des Fahrzeugs überführbar ist, **dadurch gekennzeichnet, dass** die Trägeranordnung als horizontal in Fahrzeuglängsrichtung verlagerbarer Linearträger (8c) gestaltet ist, wobei der Linearträger (8c) in Fahrtrichtung gesehen hinter einer Fahrzeugsitzanordnung (3) positioniert ist und durch Druckmittel (18) gegen eine Rückenlehnenanordnung (4) der Fahrzeugsitzanordnung (3) gedrückt gehalten ist.

2. Schutzvorrichtung nach Anspruch 1, **dadurch gekennzeichnet, dass** wenigstens ein flexibles Flächengebilde (17) vorgesehen, das stirnseitig mit wenigstens einem Teil der Rückenlehnenanordnung (4) lösbar verbunden ist.

3. Schutzvorrichtung nach Anspruch 1, **dadurch gekennzeichnet, dass** die Trägeranordnung durch eine Antriebseinrichtung mittels einer Steuereinheit beweglich ist.

4. Schutzvorrichtung nach Anspruch 1, **dadurch gekennzeichnet, dass** die Trägeranordnung zumindest teilweise manuell beweglich ist.

## Claims

1. A protective device for a luggage area of a vehicle having at least one holding device for carrying at least one flexible flat structure that can be moved into a least one withdrawn functional position and into a compact resting position in the holding device, wherein the holding device (5c) is held on a mounting system that is movably mounted on the vehicle so that the holding device (5c) is transferable into at least two different support positions within the vehicle, **characterised in that** the mounting system is designed as a linear mount (8c) that can move horizontally along the length of vehicle, wherein the linear mount (8c), viewed from the direction of travel, is located behind a vehicle seat arrangement (3) and is held by fasteners (18) against a backrest arrangement (4) of the vehicle seat arrangement (3).

2. A protective device according to claim 1, **characterised in that** at least one flexible flat structure (17) is provided, whose face is releasably connected to at least one part of the backrest arrangement (4).

3. A protective device according to claim 1, **characterised in that** the mounting system is movable by a drive by means of a control unit.

4. A protective device according to claim 1, **characterised in that** the mounting system can be moved manually at least part way.

## Revendications

1. Dispositif de protection pour le compartiment bagages d'un véhicule comportant au moins un dispositif de logement pour la fixation d'au moins un panneau souple qui est disposé de manière mobile dans au moins une position fonctionnelle sortie ainsi que dans une position de repos compacte au niveau du dispositif de logement, le dispositif de logement (5c) étant maintenu sur un ensemble de supports qui est logé de manière mobile côté véhicule de telle sorte que le dispositif de logement (5c) puisse être amené au moins dans deux positions différentes à l'intérieur du véhicule, **caractérisé en ce que** l'ensemble de supports est réalisé sous la forme de support linéaire (8c) pouvant être déplacé à l'horizontale dans le sens de la longueur du véhicule, le support linéaire (8c) étant positionné, vu dans le sens de la marche, derrière un ensemble de sièges (3) et est maintenu comprimé par des moyens de pression (18) contre un ensemble de dossiers (4) de l'ensemble de sièges (3).

2. Dispositif de protection selon la revendication 1, **caractérisé en ce qu'**est prévu au moins un panneau souple (17) qui est raccordé de manière détachable, côté frontal, à au moins une partie de l'ensemble de dossiers (4).

3. Dispositif de protection selon la revendication 1, **caractérisé en ce que** l'ensemble de supports peut être déplacé par un dispositif d'entraînement au moyen d'une unité de commande.

4. Dispositif de protection selon la revendication 1, **caractérisé en ce que** l'ensemble de supports peut être déplacé au moins partiellement à la main.
